Europäisches Patentamt

European Patent Office

Office européen des brevets

(19)

(11) **EP 0 457 205 B1**

(12) **EUROPÄISCHE PATENTSCHRIFT**

(45) Veröffentlichungstag und Bekanntmachung des Hinweises auf die Patenterteilung:
**10.01.1996 Patentblatt 1996/02**

(51) Int Cl.6: **C11D 3/37**, C11D 3/382, C08H 1/00, C08L 89/00, C08F 289/00

(21) Anmeldenummer: **91107587.7**

(22) Anmeldetag: **10.05.1991**

(54) **Verwendung von wasserlöslichen oder wasserdispergierbaren gepfropften Proteinen als Zusatz zu Wasch- und Reinigungsmitteln**

Use of water-soluble or water-dispersible grafted proteins as detergent and cleaning agent additives

Utilisation de protéines greffées solubles ou dispersables dans l'eau comme additifs pour détergents et solutions nettoyantes

(84) Benannte Vertragsstaaten:
**BE CH DE ES FR GB IT LI NL SE**

(30) Priorität: **18.05.1990 DE 4016002**

(43) Veröffentlichungstag der Anmeldung:
**21.11.1991 Patentblatt 1991/47**

(73) Patentinhaber: **BASF Aktiengesellschaft**
**D-67063 Ludwigshafen (DE)**

(72) Erfinder:
• **Kroner, Matthias, Dr.**
**W-6702 Bad Duerkheim (DE)**
• **Hartmann, Heinrich, Dr.**
**W-6703 Limburgerhof (DE)**
• **Baur, Richard, Dr.**
**W-6704 Mutterstadt (DE)**
• **Trieselt, Wolfgang, Dr.**
**W-6700 Ludwigshafen (DE)**

(56) Entgegenhaltungen:
EP-A- 0 021 379      EP-A- 0 219 048
US-A- 3 558 499     US-A- 4 607 089

• **WORLD PATENTS INDEX Week 7924, Derwent Publications Ltd., London, GB; AN 79-45046B**
• **WORLD PATENTS INDEX Week 7808, Derwent Publications Ltd., London, GB; AN 78-14873A**

**Beschreibung**

Aus ökologischen Gründen wurde in den letzten Jahren verstärkt nach Ersatzstoffen für Phosphate in Waschmitteln gesucht. Besondere Bedeutung als Phosphatersatzstoffe kommen dabei Polymeren zu. So ist beispielsweise aus der EP-PS 0 025 551 die Verwendung von Copolymerisaten aus Maleinsäure und Acrylsäure als Inkrustationsinhibitor in Waschmitteln bekannt. Die Copolymerisate werden in Mengen bis zu 10 % in der Waschmittelformulierung verwendet. Mit Hilfe dieser Copolymerisate ist es möglich, die bisher gebräuchlichen Phosphate in Waschmitteln ganz oder teilweise zu ersetzen. Nach dem Waschprozess gelangen diese Copolymerisate ins Abwasser und werden daraus in Kläranlagen am Klärschlamm nahezu vollständig absorbiert. Bei Flüssigwaschmitteln, die Copolymerisate aus Acrylsäure und Maleinsäure als Phosphatersatzstoff enthalten, kommt es während der Lagerung häufig zu Entmischungen.

Aus der US-PS 4 746 456 ist bekannt, Pfropfcopolymerisate von Vinylacetat auf Polyethylenglykolen als Vergrauungsinhibitor in Waschmittelformulierungen zu verwenden.

Aus der US-PS 3 558 499 sind Waschmittel bekannt, die als wesentliche Bestandteile etwa 10 bis etwa 25 % eines anionischen oder nichtionischen oberflächenaktiven Mittels, etwa 60 bis etwa 89,9 % eines anorganischen Builders, wie Natriumtripolyphosphat, Natriumcarbonat oder Natriumsilikat und etwa 0,1 bis etwa 10 Gew.-% eines Vergrauungsinhibitors enthalten. Der Vergrauungsinhibitor besteht aus einem Pfropfcopolymerisat von Stärke mit Acrylsäure oder Methacrylsäure. Der Gehalt an polymerisierter Acrylsäure oder Methacrylsäure im Pfropfcopolymerisat beträgt etwa 1 bis 50 %.

Aus der JP-A-55/155 097 sind Waschmittelformulierungen bekannt, die zur Unterdrückung der Wiederanschmutzung von Wäsche beim Waschen 0,05 bis 5 Gew.-% einer gepfropften Stärke enthalten, die durch Polymerisieren von 0,5 bis 100 Gew.-Teilen eines wasserlöslichen Monomeren oder durch Hydrolyse wasserlöslich werdenden Monomeren in Gegenwart von 100 Gew.-Teilen Stärke hergestellt werden. Gemäß den Angaben in den Beispielen wurde eine mit Natriumacrylat gepfropfte oxidierte Stärke (8 Gew.-Teile Natriumacrylat auf 100 Gew.-Teile oxidierte Stärke) und eine mit Hydroxypropylmethacrylat gepfropfte oxidierte Stärke (2,5 Gew.-Teile Hydroxypropylacrylat pro 100 Gew.-Teile Stärke) und ein Maisstärke-Polyvinylalkohol-Pfropfcopolymerisat (100 Gew.-Teile Maisstärke/5 Gew.-Teile Vinylacetat, 63 % Hydrolysegrad) verwendet.

Aus der JP-A-61/031 498 sind Waschmittel bekannt, die als Builder 0,5 bis 50 Gew.-% an Pfropfpolymerisaten aus einem Monosaccharid und/oder einem Oligosaccharid und einem wasserlöslichen ethylenisch ungesättigten Monomer enthalten. Gemäß den Beispielen wurde Acrylsäure auf Saccharose oder Glukose gepfropft. Wie die Beispiele und Vergleichsbeispiele dieser Veröffentlichung zeigen, erhöht ein Zusatz von Polyacrylsäure zu einer Waschmittelformulierung die Waschkraft stärker als der Zusatz der gleichen Menge einer mit Acrylsäure oder Methacrylsäure gepfropften Stärke. Im Gegensatz zu der praktisch nicht biologisch abbaubaren Polyacrylsäure sollen die gepfropften Stärken zu einem hohen Teil biologisch abbaubar sein.

Aus der US-PS 4 812 550 ist ein Verfahren zur Herstellung von gepfropften Proteinen bekannt, bei dem man ethylenisch ungesättigte Monomere mit nicht mehr als 14 Kohlenstoffatomen im Molekül, z.B. konjugierten Dienen, Nitrilen, Amiden, Acrylaten, Alkylacrylaten oder Vinylarylmonomeren in Gegenwart von löslich gemachten Proteinen in wäßrigem Medium radikalisch polymerisiert. Die so erhältlichen Latices werden als Bindemittel für pigmentierte Papierstreichmassen verwendet. Aus der US-PS 3 651 210 ist bekannt, daß man spezielle Emulsionscopolymerisate mit löslich gemachten Proteinen umsetzen kann. Die auf diese Weise polymermodifizierten Proteine werden als Beschichtungsmittel zur Herstellung lederähnlicher Beschichtungen oder Filme verwendet. Die so erhältlichen Filme sind biologisch abbaubar. Angaben über Reaktionsmechanismen bei der Herstellung von Polymerisaten in Gegenwart von Proteinen findet man beispielsweise in J. Polym. Sci., Band 27, 2123-2133 (1989), J. Appl. Polym. Sci., Band 37, 2203-2212 (1989) und J. Appl. Polym. Sci., Band 36, 215-227 (1988).

Der vorliegenden Erfindung liegt die Aufgabe zugrunde, Waschmitteladditive zur Verfügung zu stellen, die Phosphate in Waschmitteln ersetzen können und die insbesondere mit Flüssigwaschmitteln verträglich und weitgehend biologisch abbaubar sind. Aufgabe der Erfindung ist es außerdem, phosphatfreie und phosphatarme Wasch-und Reinigungsmittel zur Verfügung zu stellen, die die vorstehend genannten Additive enthalten.

Die Aufgabe wird erfindungsgemäß gelöst durch Verwendung von wasserlöslichen oder wasserdispergierbaren gepfropften Proteinen, die erhältlich sind durch radikalisch initiierte Copolymerisation von

(A) monoethylenisch ungesättigten Monomeren in Gegenwart von

(B) Proteinen, hydrolytisch oder enzymatisch partiell abgebauten Proteinen oder von Proteinen, deren funktionelle Gruppen mit Carbonsäureanhydriden umgesetzt worden sind,

im Gewichtsverhältnis (A):(B) von (0,5 bis 90):(99,5 bis 10) als Zusatz zu Wasch- und Reinigungsmitteln in Mengen von 0,1 bis 20 Gew.-%, bezogen auf die jeweiligen Formulierungen.

Gegenstand der Erfindung sind außerdem phosphatfreie und phosphatarme Wasch- und Reinigungsmittel, die als wesentliche Bestandteile Tenside enthalten und dadurch gekennzeichnet sind, daß sie 0,1 bis 20 Gew-%, bezogen auf die jeweiligen Formulierungen, an wasserlöslichen oder wasserdispergierbaren gepfropften Proteinen enthalten, die durch radikalisch initiierte Copolymerisation von

(A) monoethylenisch ungesättigten Monomeren in Gegenwart von

(B) Proteinen, hydrolytisch oder enzymatisch partiell abgebauten Proteinen oder von Proteinen, deren funktionelle Gruppen mit Carbonsäureanhydriden umgesetzt worden sind,

im Gewichtsverhältnis (A) : (B) von (0,5 bis 90) : (99,5 bis 10) erhältlich sind.

Monoethylenisch ungesättigte Monomere der Gruppe (A) zur Herstellung der gepfropften Proteine sind beispielsweise $C_3$- bis $C_8$-monoethylenisch ungesättigte Carbonsäuren, z.B. Acrylsäure, Methacrylsäure, Ethacrylsäure, Crotonsäure, Maleinsäure, Fumarsäure, Itaconsäure, Aconitsäure und Vinylessigsäure. Außerdem können - soweit technich zugänglich - die zugehörigen Anhydride der genannten Monomeren verwendet werden, z.B. Maleinsäureanhydrid und Itaconsäureanhydrid. Von den obengenannten Verbindungen verwendet man vorzugsweise Acrylsäure, Methacrylsäure, Maleinsäure, Maleinsäureanhydrid oder deren Gemische zur Herstellung der gepfropften Proteine. Die Carbonsäuren können bei der Pfropfcopolymerisation als freie Carbonsäuren oder in Form der Salze mit anorganischen oder organischen Basen eingesetzt werden. Zur Neutralisation der monoethylenisch ungesättigten Carbonsäuren eignen sich beispielsweise Natronlauge, Kalilauge, Ammoniak, Trimethylamin, Triethylamin, Tributylamin, Triethanolamin, Diethanolamin, Morpholin, Methylamin oder Dimethylamin. Zur Neutralisation können auch Mischungen verschiedener Basen verwendet werden, z.B. Natronlauge und Ethanolamin.

Als Verbindungen der Gruppe (A) kommen die Ester der obengenannten Carbonsäuren mit einwertigen oder mehrwertigen $C_1$- bis $C_{22}$-Alkoholen oder die Additionsprodukte von 1 bis 50 Mol eines Alkylenoxids, wie Ethylenoxid, Propylenoxid oder Butylenoxid, an 1 Mol eines $C_1$- bis $C_{22}$-Alkohols in Betracht. Geeignete Alkohole, die zur Veresterung der oben beschriebenen monoethylenisch ungesättigten Carbonsäuren verwendet werden, sind beispielsweise Methanol, Ethanol, n-Propanol, iso-Propanol, n-Butanol, iso-Butanol, tert.-Butanol, 2-Ethylhexylalkohol, Stearylalkohol, Palmitylalkohol, Decylalkohol, Dodecylalkohol, Talgfettalkohol, Sorbit, Mannit, Glycerin, Ethylenglykol, Propylenglykol, Ethylenglycolbutylether und Diethylenglykolmethylether. Vorzugsweise verwendet man die Ester der Acrylsäure und Methacrylsäure mit Methanol, Ethanol, n-Propanol, n-Butanol, tert.-Butanol, 2-Ethylhexylalkohol, Stearylalkohol, Ethylenglykol und Propylenglykol. Die genannten Alkohole können jedoch auch zunächst alkoxyliert werden, z.B. durch Umsetzung mit Ethylenoxid und/oder Propylenoxid und dann mit Acrylsäure oder anderen, obengenannten monoethylenisch ungesättigten Carbonsäuren verestert werden. Von den genannten Estern werden besonders bevorzugt n-Butylacrylat, Methylmethacrylat und Ethylacrylat in Mischung mit Acrylsäure und/oder Methacrylsäure in Gegenwart von Proteinen der Pfropfcopolymerisation unterworfen.

Außerdem eignen sich als Monomere der Gruppe (A) die Amide von $C_3$- bis $C_8$-Carbonsäuren, die sich von Ammoniak, $C_1$- bis $C_{22}$-Alkylaminen oder Dialkylaminen ableiten. Geeignete Amine zur Herstellung der Säureamide sind beispielsweise Methylamin, Dimethylamin, Stearylamin, Talgfettamin und Palmitylamin. Außerdem können die N-Methylolderivate der Amide bei der Pfropfcopolymerisation eingesetzt werden, z.B. N-Methylolacrylamid oder N-Methylolmethacrylamid. Die genannten N-Methylolderivate der Amide können auch verethert sein, z.B. mit $C_1$- bis $C_{22}$-Alkoholen, beispielsweise Monomere wie N-(Butoxymethyl)-acrylamid und N-(Isobutoxymethyl)-acrylamid. Eine weitere Modifikation ergibt sich dadurch, daß die N-methylolierten Amide mit alkoxylierten Alkoholen verethert sein können, z.B. N-Alkyloxypolypropoxyacrylamid oder N-Alkyloxypolyethoxyacrylamid, wobei der Alkylrest 1 bis 22 Kohlenstoffatome aufweisen kann und der Alkoxylierungsgrad 1 bis 100 beträgt.

Weitere geeignete Monomere (A) sind die Nitrile der Carbonsäuren, wie Acrylnitril oder Methacrylnitril, Vinylether von 1 bis 8 Kohlenstoffatomen enthaltenden Alkoholen, z.B. Vinylmethylether, Vinylisobutylether, Vinyl-n-butylether, Vinylethylether oder Vinylisopropylether sowie Vinylester von gesättigten $C_1$- bis $C_{22}$-Carbonsäuren, insbesondere Vinylacetat, Vinylpropionat und Vinylbutyrat. Als Monomere können außerdem N-Vinylamide, wie N-Vinylformamid, N-Vinyl-N-methylformamid, N-Vinylacetamid, N-Vinylcaprolactam oder N-Vinylpyrrolidon eingesetzt werden. Außerdem eignen sich Vinylpyridine, wie N-Vinylpyridin, 2-Vinylpyridin und 4-Vinylpyridin, Acrylamidopropansulfonsäure, Acrylamidoethansulfonsäure, N,N-Dialkylamino-$C_2$- bis $C_4$-Alkyl(meth)acrylamide, z.B. Dimethylaminoethylacrylamid, Dimethylaminoethylmethacrylamid, Diethylaminoethylacrylamid und Diethylaminoethylmethacrylamid. Diese Verbindungen werden vorzugsweise als Salze oder in Form der quarternisierten Verbindungen eingesetzt. Sie können jedoch auch in Form der freien Base der Copolymerisation unterworfen werden. Bevorzugt verwendet man diese Verbindungen in Form der Hydrochloride, Methochloride und Methosulfate. Weitere geeignete Monomere sind Styrol und Alkylstyrole. Die Pfropfcopolymerisate enthalten die Monomeren (A) in Mengen von 0,5 bis 90, vorzugsweise 10 bis 85 Gew.-% in einpolymerisierter Form.

Als weitere wesentliche Komponente bei der Pfropfcopolymerisation werden (B) Proteine eingesetzt. Hierfür eignen sich sämtliche Proteine, die unter den Polymerisationsbedingungen zu einem Anteil von mindestens 20 Gew.-% im Polymerisationsmedium löslich sind. Geeignete Proteine sind beispielsweise in der oben zitierten US-PS 4 812 550 beschrieben. Eine weitere Übersicht über geeignete Proteine findet man in Ullmanns Enzyklopädie der technischen Chemie, 4. Auflage, Weinheim 1980 Band 19, 491 bis 557. Bei den Proteinen handelt es sich um nachwachsende Rohstoffe. Sie stammen beispielsweise aus Häuten, Stütz- und Bindegewebe, Knochen und Knorpel: Collagen, Elastin, Gelatine, Ossein und Hautleim. Proteine aus der Milch sind Molkenproteine, Kasein und Lactalbumin. Aus Wolle, Borsten, Federn und Haaren kommt Keratin. Außerdem eignen sich Proteine aus Fischen und aus Eiern sowie aus Blut als Schlachtabfall, z.B. Blutproteine, Albumin, Globulin, Globin, Fibrinogen und Hämoglobin. Weitere geeignete Proteine stammen aus Pflanzen, wie Mais, Weizen, Gerste und Hafer: Glutelin, Prolamin, Zein und Gluten. Außerdem können Proteine aus Samen gewonnen werden, z.B. aus Sojabohnen, Kattunsamen, Erdnüssen, Sonnenblumen, Raps, Kokos, Leinsamen, Sesam, Saflor, Erbsen, Bohnen und Linsen. Außerdem können die Eiweißbestandteile von Klee, Luzerne, Gras, Kartoffeln, Maniok und Yam verwendet werden. Weitere Proteinlieferanten sind Bakterien, Pilze, Algen und Hefen, z.B. Pseudomonas, Lactobazillus, Penicillium, Blaualgen, Grünalgen, Chlorella, Spirulina und Überschußhefe. Proteine, die vorzugsweise als Komponente (B) zur Herstellung der Pfropfcopolymerisate eingesetzt werden, sind Kasein, Gelatine, Knochenleim, Proteine aus Sojabohnen, Getreide, Mais und Erbsen. Die Proteine werden beispielsweise durch Lösen, Mahlen, Sichten und Klassieren aus den natürlichen Rohstoffen gewonnen. Um sie in eine lösliche Form zu überführen, ist in vielen Fällen ein Aufschluß durch physikalische, chemische oder enzymatische Behandlung notwendig, z.B. Hydrolyse mit Säure oder Alkalien, Fermentation mit Hefen, Bakterien oder Enzymen, Extraktionsmethoden, um Nebenbestandteile zu entfernen, Koagulieren aus Auszügen durch Hitze, Elektrolytzusatz, pH-Veränderung oder Zusatz von Fällungsmitteln. Um reine Produkte herzustellen, bietet sich beispielsweise ein fraktioniertes Lösen und Fällen sowie ein Dialysieren an.

Bei der Copolymerisation werden (A) die monoethylenisch ungesättigten Monomeren in Gegenwart von (B) den Proteinen im Gewichtsverhältnis (A):(B) von (0,5 bis 90):(99,5 bis 10), vorzugsweise (10 bis 85):(90:15) eingesetzt.

Die Monomeren (A) werden in Gegenwart von Proteinen radikalisch polymerisiert. Als Radikalspender kann man sämtliche dafür bekannten Verbindungen einsetzen. Diese Initiatoren können in Wasser löslich oder auch unlöslich sein. In Wasser lösliche Initiatoren sind beispielsweise anorganische Peroxide, wie Kalium-, Natrium- und Ammoniumperoxodisulfat sowie Wasserstoffperoxid. Außerdem eignen sich als Initiatoren organische Peroxide, Hydroperoxide, Persäuren, Ketonperoxide, Perketale und Perester, z.B. Methylethylketonhydroperoxid, Cumolhydroperoxid, tert.-Butylhydroperoxid, 1,1-Di(tert.-butylperoxy) cyclohexan, Di(tert.-butyl)peroxid, tert.-Butyloxyperpivalat, tert.-Butylmonoperoxy-maleat, Dicyclohexylperoxydicarbonat, Dibenzoylperoxid, Diacetylperoxid, Didecanoylperoxid sowie Mischungen von Peroxiden. Außerdem eignen sich Redoxsysteme, die außer einer Peroxyverbindung noch eine reduzierende Komponente enthalten. Geeignete reduzierende Komponenten sind beispielsweise CerIII- und Eisen-II-salze, Natriumsulfit, Natriumhydrogensulfit, Natriumdithionit, Ascorbinsäure und Natriumformaldehydsulfoxylat. Die Auswahl geeigneter Initiatoren erfolgt vorzugsweise in der Weise, daß man solche Radikale bildenden Verbindungen einsetzt, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende führt, so ist es zweckmäßig, mit mindestens zwei bei verschiedenen Temperaturen zerfallenden Initiatoren zu arbeiten, nämlich zunächst einen bereits bei niedrigerer Temperatur zerfallenden Initiator für den Start der Polymerisation und dann die Hauptpolymerisation mit einem Initiator zu Ende zu führen, der bei höherer Temperatur zerfällt. Durch Zusatz von Schwermetallsalzen, z.B. Kupfer-, Kobalt-, Mangan-, Eisen-, Nickel- und Chromsalzen zu peroxidischen Katalysatoren kann deren Zerfallstemperatur erniedrigt werden. Geeignete Initiatoren sind außerdem Azoverbindungen, wie 2,2'-Azobisisobutyronitril, 2,2'-Azobis(2-amidinopropan)dihydrochlorid, 2, 2'-Azobis(2-methylpropionamidin)dihydrochlorid, 2,2'-Azobis-(2,4-dimethylvaleronitril) und Dimethyl-2,2' -azobisisobutyrat. Besonders bevorzugt werden Wasserstoffperoxid, Kalium-, Ammonium- und Natriumperoxodisulfat und tert.-Butylperpivalat als Initiator bei der Pfropfcopolymerisation eingesetzt. Bezogen auf die zu polymerisierenden Monomeren verwendet man 0,5 bis 10, vorzugsweise 1 bis 6 Gew.-% eines Initiators oder eines Gemisches von Polymerisationsinitiatoren. Die Einsatzmenge des Initiators kann erheblichen Einfluß auf das entstehende Pfropfcopolymerisat haben.

Die Pfropfcopolymerisation kann gegebenenfalls in Gegenwart von Reglern durchgeführt werden. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde wie Formaldehyd, Acetaldehyd, Propionaldehyd, n-Butyraldehyd und iso-Butyraldehyd, Ameisensäure, Ammoniumformiat, Propionsäure, Hydroxylaminsulfat und Butenole. Falls die Pfropfcopolymerisation in Gegenwart von Reglern durchgeführt wird, kann man davon 0,05 bis 20 Gew.-%, bezogen auf die bei der Polymerisation eingesetzten Monomeren, verwenden.

Die Polymerisation kann in wäßrigem Medium oder in einem organischen Lösemittel durchgeführt werden, in dem die Proteine zu mindestens 20 Gew.-% löslich sind. Geeignete organische Lösemittel sind beispielsweise Dimethylformamid, Essigsäure, Ameisensäure, Alkohole, wie Methanol, n-Propanol, iso-Propanol, n-Butanol, tert.-Butanol, iso-Butanol, Ether, wie Tetrahydrofuran, Dioxan, Diethylenglykol, Ethylenglykoldimethylether, Diethylenglykoldimethylether, Ethylenglykolmonomethylether, Diethylenglykolmonomethylether, ethoxylierte Fettalkohole und Oxoalkohole (2 bis 100 Mol Ethylenoxid addiert an 1 Mol Alkohol) z.B. die Addukte von 7 Mol Ethylenoxid an 1 Mol Dodecanol oder an 1 Mol eines $C_{13}/C_{15}$-Oxoalkohols. Außerdem können Ketone, wie Aceton und Methylethylketon, als inertes Verdünnungsmittel bei der Pfropfpolymerisation verwendet werden. Besondes bevorzugt ist der Einsatz von Methanol, Isopropanol, Tetrahydrofuran, Dioxan und ethoxylierten Fett- und Oxoalkoholen als organische Lösemittel. Sofern man Pfropfcopolymerisate herstellen will, die Anhydridgruppen enthalten, z.B. durch Polymerisieren von Maleinsäureanhydrid in Gegenwart eines Proteins, führt man die Polymerisation in wasserfreien organischen Lösemitteln, die gegenüber dem Anhydrid inert sind, durch, z.B. in Essigsäure, Dioxan oder Tetrahydrofuran. Die Pfropfcopolymerisation kann in Mischungen organischer Lösemittel sowie in Mischungen aus Wasser und organischen Lösemitteln, die sich in Wasser lösen, durchgeführt werden. Die Konzentration von Monomer und Protein in dem jeweils verwendeten Lösemittel beträgt 10 bis 60, vorzugsweise 15 bis 50 Gew.-%.

Als zusätzliche Additive können auch anionische, nichtionische, amphotere oder kationische Tenside, sowie sämtliche Bestandteile der nachstehend beschriebenen Wasch- und Reinigungsmittel in Mengen von 0 bis 30 % bzgl. Monomere anwesend sein. Durch Zugabe dieser Bestandteile kann die Eigenschaft der Pfropfcopolymeren beeinflußt werden.

Die Pfropfcopolymerisation wird in üblichen Vorrichtungen durchgeführt, die mit Mischorganen versehen sind, z.B. mit Rührern ausgestatteten Kolben, Kesseln, Autoklaven und zylinderförmigen Reaktoren. Die Pfropfcopolymerisation kann auch in Kesselkaskaden oder in miteinander verbundenen Polymerisationsvorrichtungen durchgeführt werden. Die Copolymerisation kann diskontinuierlich oder kontinuierlich erfolgen. Als Polymerisationsvorrichtung eignen sich auch Kneter. Sofern wasserlösliche Monomere (A) bei der Pfropfpolymerisation eingesetzt werden, kann man die Polymerisation auch nach dem Verfahren einer umgekehrten Suspension zur Polymerisation oder einer Wasser-in-Öl-Emulsionspolymerisation vornehmen. Vorzugsweise erfolgt die Pfropfpolymerisation als Lösungspolymerisation. Für spezielle Anwendungen kann die Fällungspolymerisation von Interesse sein. Die Polymerisation kann außer der Initiierung durch unter Polymerisationsbedingungen Radikale bildenden Verbindungen auch durch Einwirkung von UV-Bestrahlung oder der Einwirkung energiereicher Strahlen, z.B. $\alpha$, $\beta$ oder $\gamma$-Strahlen, initiiert werden. Die Pfropfcopolymerisation wird in dem Temperaturbereich von 20 bis 160, vorzugsweise 30 bis 100°C durchgeführt. Bei Temperaturen, die oberhalb des Siedepunktes des jeweils verwendeten Lösemittels liegen, wird die Pfropfcopolymerisation üblicherweise in druckdicht ausgelegten Apparaturen durchgeführt. Vorzugsweise polymerisiert man unter Ausschluß von Luftsauerstoff in einer Inertgasatmosphäre, z.B. verwendet man als Inertgase Stickstoff, Argon, Helium oder Kohlendioxid.

Reaktionstemperatur und Initiatormenge kann erheblichen Einfluß auf das Pfropfcopolymerisat haben.

Bei kleineren Polymerisationseinsätzen, bei denen die Polymerisationswärme ausreichend schnell abgeführt werden kann, kann man die zu polymerisierenden Monomeren und das Protein zusammen mit mindestens einem Polymerisationsinitiator vorlegen und durch Erhitzen auf die jeweils notwendige Polymerisationstemperatur polymerisieren. Vorteilhafter ist jedoch, wenn man zunächst nur einen Teil der Monomeren und des Initiators in der Polymerisationsvorrichtung vorlegt und die restlichen Monomeren und den Initiator nach Maßgabe des Fortschritts der Polymerisation kontinuierlich oder absatzweise zufügt. Die Reihenfolge, gemäß der die Reaktionsteilnehmer in den Polymerisationsreaktor dosiert werden, kann beliebig variiert werden. So ist es beispielsweise möglich, eine Proteinlösung bzw. eine Dispersion eines Proteins in einem Reaktor vorzulegen, auf die erforderliche Polymerisationstemperatur zu erhitzen und die Monomeren und Initiatoren kontinuierlich oder absatzweise zuzufügen. Setzt man bei der Pfropfcopolymerisation mehrere Monomere ein, so können die einzelnen Monomeren nacheinander, als Mischung oder auch aus getrennten Dosiereinrichtungen gleichzeitig in die Polymerisationszone dosiert werden. Diese Verfahrensvariante kann jedoch erhebliche Auswirkungen auf die Wirksamkeit der Pfropfpolymerisate als Wasch- und Reinigungsmitteladditiv haben.

Ebenso kann der pH-Wert des Reaktionsmedium einen Einfluß auf die Eigenschaften des Pfropfcopolymerisats haben. Die Löslichkeit der Proteine unterhalb und oberhalb des isoelektrischen Punkts kann bei der Pfropfcopolymerisation ausgenutzt werden. Saure oder basische Monomere können in Form der entsprechenden Salze eingesetzt werden. Beispielsweise findet Acrylsäure als freie Säure oder als Alkalisalz Anwendung. Die Pfropfcopolymerisation kann in dem pH-Bereich von 1 bis 14, vorzugsweise 6 bis 12 durchgeführt werden. Durch pH-Wertänderungen können die Pfropfcopolymerisate beispielsweise aus Lösungen ausgefällt werden. Hiervon kann man bei der Aufarbeitung, Reinigung und Isolierung der Pfropfcopolymerisate Gebrauch machen. Es kann von Vorteil sein, 2 oder mehrere Proteine bei der Pfropfcopolymerisation einzusetzen. Die Reihenfolge der dabei eingesetzten Proteine kann günstige Auswirkungen auf die Eigenschaften der entstehenden pfropfcopolymerisate haben. In manchen Fällen ist es von Vorteil, die emulgierende Fähigkeit eines Proteins auszunutzen, indem man zuerst ein wasserunlösliches Monomer mit einem Protein emulgiert und anschließend ein weiteres Protein zufügt und das Reaktionsgemisch der Pfropfcopolymerisation unterwirft. Die jeweils bei der Pfropfcopolymerisation eingesetzten Proteine können davor oder nach der Pfropfpolymerisation noch auf verschiedenste Weise chemisch modifiziert werden. Beispielsweise kann es von Vorteil sein, das Protein vor der Polymerisation hydrolytisch oder enzymatisch partiell abzubauen. Je nach Reaktionsbedingungen kann während der Pfropfcopolymerisation ein teilweiser hydrolytischer Abbau der Proteine erfolgen.

Auch können vor der radikalischen Pfropfung funktionelle Gruppen der Proteine mit reaktiven Carbonsäurederivaten, wie z.B. Carbonsäureanhydride umgesetzt werden. Beispiele für Carbonsäureanhydride und Acetanhydrid, Bernsteinsäureanhydrid, Maleinsäureanhydrid.

Die so erhältlichen, mit monoethylenisch ungesättigten Monomeren gepfropften Proteine, die entweder in gelöster oder dispergierter Form vorliegen, haben K-Werte von 10 bis 200, vorzugsweise 15 bis 180 (bestimmt nach H. Fikentscher in 1%iger wäßriger Lösung bei 25°C und pH 7). Sie werden als Zusatz zu Wasch- und Reinigungsmitteln in Mengen von 0,1 bis 20 Gew.-%, bezogen auf die jeweiligen Formulierungen, verwendet. Sie bewirken darin eine Verbesserung der Primär- und Sekundärwaschwirkung und zeigen außerdem Soil release-Eigenschaften. Sie werden erfindungsgemäß in Wasch- und Reinigungsmitteln eingesetzt, die entweder phosphatfrei sind oder einen Phosphatgehalt von höchstens 25 Gew.-% Natriumtriphosphat aufweisen. Die Pfropfcopolymerisate können dabei in Form eines Granulats, einer Paste, einer hochviskosen Masse, als Dispersion oder als Lösung in einem Lösemittel der Wasch- und Reinigungsmittelformulierung zugegeben werden. Die Pfropfcopolymerisate können auch an der Oberfläche von Stellmitteln, z.B. Natriumsulfat oder Gerüststoffen (Zeolithen oder Bentoniten) sowie anderen festen Hilfsstoffen der Waschmittelformulierung adsorbiert werden.

Die Pfropfcopolymerisate zeigen im geschlossenen Flaschentest einen dem Proteinanteil entsprechenden biololgischen Abbau, im Eliminierungstest nach Zahn-Wellens sind sie sehr gut eliminierbar. Zur Lagerung in Gegenwart von Wasser setzt man ein handelsübliches Konservierungsmittel zu. In luftgetrocknetem Zustand sind die Pfropfcopolymerisate auch ohne Konservierungsmittel stabil lagerbar.

Die in Betracht kommenden Wasch- und Reinigungsmittelformulierungen sind pulverförmig oder flüssig. Die Zusammensetzung von Waschmittelformulierungen kann sehr unterschiedlich sein. Gleiches gilt für die Zusammensetzung von Reinigungsmittelformulierungen. Wasch- und Reinigungsmittelformulierungen enthalten üblicherweise Tenside und gegebenenfalls Builder. Diese Angaben gelten sowohl für flüssige als auch für pulverförmige Wasch- und Reinigungsmittelformulierung. Beispiele für die Zusammensetzung von Waschmittelformulierungen, die in Europa, in den USA und in Japan gebräuchlich sind, findet man beispielsweise in Chemical and Engn. News, Band 67, 35 (1989) tabellarisch dargestellt sowie in Ullmanns Encyklopädie der technischen Chemie, Verlag Chemie, Weinheim 1983, 4. Auflage, Seiten 63-160.

Universalhaushaltswaschmittel für Trommelwaschmaschinen, wie sie in Europa weit verbreitet sind, enthalten gewöhnlich 5 bis 10 Gew.-% Aniontenside; 1 bis 5 Gew.-% nichtionische Tenside; 1 bis 5 Gew.-% Schaumregulatoren, wie Silikonöle oder Seifen; 0 bis 40 Gew.-% Enthärtungsmittel, wie Soda oder Pentanatriumtriphosphat, das durch die erfindungsgemäßen Verbindungen teilweise oder ganz ersetzt werden kann; 0 bis 30 Gew.-% Ionenaustauscher, wie Zeolith A; 2 bis 7 Gew.-% Natriumsilikate als Korrosionsinhibitoren; 10 bis 30 Gew.-% Bleichmittel, wie Natriumperborat oder Natriumpercarbonat; 0 bis 5 Gew.-% Bleichaktivatoren, wie Tetraacetylethylendiamin, Pentaacetylglucose, Hexaacetylsorbit oder Acyloxibenzolsulfonat; Stabilisatoren, wie Magnesiumsilikat oder Ethylendiamintetraacetat; Vergrauungsinhibitoren, wie Carboximethylcellulose, Methyl- und Hydroxialkylcellulosen, mit Vinylacetat gepfropfte Polyglykole, oligomere und polymere Terephthalsäure/Ethylenglykol/Polyethylenglykol-Ester; Enzyme; optische Aufheller; Duftstoffe; Weichmacher; Farbstoffe und Stellmittel.

Im Gegensatz hierzu sind die Heavy Duty Detergents, die in den USA, Japan und diesen Ländern benachbarten Staaten in den Bottichwaschmaschinen verwendet werden, meist frei von Bleichmitteln, ihr Anteil an Aniontensiden ist dafür zwei bis dreimal so hoch, sie enthalten mehr Waschalkalien, wie Soda und Natriumsilikate (in der Regel bis zu 25 Gew.-%) und natürlich fehlen ihnen auch die Bleichaktivatoren und Bleichstabilisatoren. Die Gehaltsangaben für Tenside und andere Inhaltsstoffe können sich noch beträchtlich erhöhen, wenn es sich um sogenannte Waschmittelkonzentrate handelt, die stellmittelfrei oder stellmittelarm in den Handel kommen.

Fein- und Buntwaschmittel, Wollwaschmittel und Mittel für die manuelle Wäsche enthalten ebenfalls meist kein Bleichmittel und nur geringe alkalische Bestandteile bei entsprechend erhöhtem Tensidanteil.

Waschmittel für den gewerblichen Sektor sind auf die speziellen Verhältnisse des industriellen Waschens zugeschnitten (weiches Wasser, kontinuierliches Waschen), die es gestatten, schwerpunktmäßig auf die Art des Waschguts und der Verschmutzung einzugehen. Es werden daher Kombinationen verwendet, in denen ein Bestandteil vorherrscht oder andere ganz fehlen, die bei Bedarf getrennt zudosiert werden. Deshalb variieren die Bestandteile Tenside, Builder (Gerüststoffe), Alkalien und Bleichmittel dieser Waschmittel in weiten Grenzen.

Geeignete anionische Tenside für die vorgenannten Pulverwaschmittel sind beispielsweise Natriumalkylbenzolsulfonate, Fettalkoholsulfate und Fettalkoholpolyglykolethersulfate. Einzelne Verbindungen dieser Art sind beispielsweise $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkylsulfosuccinate und sulfatierte ethoxylierte $C_{12}$- bis $C_{16}$-Alkanole. Als anionische Tenside eignen sich außerdem sulfatierte Fettsäurealkanolamine, Fettsäuremonoglyceride oder Umsetzungsprodukte von 1 bis 4 Mol Ethylenoxid mit primären oder sekundären Fettalkoholen oder Alkylphenolen. Weitere geeignete anionische Tenside sind Fettsäureester bzw. Fettsäureamide von Hydroxy- oder Aminocarbonsäuren bzw. -sulfonsäuren, wie beispielsweise die Fettsäuresarkoside, -glykolate, -lactate, -tauride oder -isothionate. Die anionischen Tenside können in Form der Natrium-, Kalium- und Ammoniumsalze sowie als lösliche Salze organischer Basen, wie Mono-, Di- oder Triethanolamin oder andere substituierter Amine vorliegen. Zu den anionischen Tensiden gehören auch die üblichen Seifen, d.h. die Alkalisalze der natürlichen Fettsäuren.

Als nichtionische Tenside (Nonionics) sind z.B. Anlagerungsprodukte von 3 bis 40, vorzugsweise 4 bis 20 Mol Ethylenoxid an 1 Mol Fettalkohol, Alkylphenol, Fettsäure, Fettamin, Fettsäureamid oder Alkansulfonamid verwendbar. Besonders wichtig sind die Anlagerungsprodukte von 5 bis 16 Mol Ethylenoxid an Kokos- oder Talgfettalkohole, an Oleylalkohol oder an synthetische Alkohole mit 8 bis 18, vorzugsweise 12 bis 18 C-Atomen, sowie an Mono- oder Dialkylphenole mit 6 bis 14 C-Atomen in den Alkylresten. Neben diesen wasserlöslichen Nonionics sind aber auch nicht bzw. nicht vollständig wasserlösliche Polyglykolether mit 1 bis 4 Ethylenglykoletherresten im Molekül von Interesse, insbesondere wenn sie zusammen mit wasserlöslichen nichtionischen oder anionischen Tensiden eingesetzt werden.

Weiterhin sind als nichtionische Tenside die wasserlöslichen, 20 bis 250 Ethylenglykolethergruppen und 10 bis 100 Propylenglykolethergruppen enthaltenden Anlagerungsprodukte von Ethylenoxid an Polypropylenglykolether, Alkylendiaminopolypropylenglykol und Alkylpolypropylenglykole mit 1 bis 10 C-Atomen in der Alkylkette brauchbar, in denen die Polypropylenglykoletherkette als hydrophober Rest fungiert.

Auch nichtionische Tenside vom Typ der Aminoxide oder Sulfoxide sind verwendbar.

Das Schaumvermögen der Tenside läßt sich durch Kombination geeigneter Tensidtypen steigern oder verringern. Eine Verringerung läßt sich ebenfalls durch Zusätze von nichttensidartigen organischen Substanzen erreichen.

Weitere Mischungsbestandteile von Waschmitteln können auch monomere, oligomere und polymere Phosphonate, Ethersulfonate auf der Basis von ungesättigten Fettalkoholen, z.B. Oleylalkoholethoxylatbutylethersulfonsäure und deren Alkalisalze sein. Diese Stoffe können z.B. mit Hilfe der Formel $RO(CH_2CH_2O)_n$-$C_4H_8$-$SO_3Na$, in der n = 5 bis 40 und R = Oleyl ist, charakterisiert werden.

Die oben beschriebenen Pfropfcopolymere können auch als Zusatz zu Flüssigwaschmitteln verwendet werden. Die Flüssigwaschmittel enthalten als Abmischkomponente flüssige oder auch feste Tenside, die in der Waschmittelformulierung löslich oder zumindest dispergierbar sind. Als Tenside kommen hierfür die Produkte in Betracht, die auch in pulverförmigen Waschmitteln eingesetzt werden sowie flüssige Polyalkylenoxide bzw. polyalkoxylierte Verbindungen. Falls die Pfropfcopolymerisate mit den übrigen Bestandteilen des Flüssigwaschmittels nicht direkt mischbar sind, kann man mit Hilfe geringer Mengen an Lösungsvermittlern, z.B. Wasser oder eines mit Wasser mischbaren organischen Lösemittel, z.B. Isopropanol, Methanol, Ethanol, Glykol, Diethylenglykol oder Triethylenglykol oder entsprechender Propylenglykole, homogene Mischungen herstellen. Die Tensidmenge in Flüssigwaschmitteln beträgt 4 bis 50 Gew.-%, bezogen auf die gesamte Formulierung, da auch bei den Flüssigwaschmitteln je nach den regionalen Marktgegebenheiten oder dem Anwendungszweck die Anteile der Bestandteile in weiten Grenzen variieren.

Die Flüssigwaschmittel können Wasser in Mengen von 10 bis 60, vorzugsweise 20 bis 50 Gew.-% enthalten. Sie können aber auch wasserfrei sein.

Wasserfreie Flüssigwaschmittel können auch Peroxoverbindungen zum Bleichen in suspendierter oder dispergierter Form enthalten. Als Peroxoverbindungen seien z.B. genannt: Natriumperborat, Peroxocarbonsäuren und Polymere mit teilweise peroxohaltigen Gruppen. Außerdem können die Flüssigwaschmittel gegebenenfalls Hydrotrope enthalten. Hierunter werden Verbindungen wie 1,2-Propandiol, Cumolsulfonat und Toluolsulfonat verstanden. Falls derartige Verbindungen zur Modifizierung der Flüssigwaschmittel eingesetzt werden, beträgt ihre Menge, bezogen auf das Gesamtgewicht des Flüssigwaschmittels, 2 bis 5 Gew.-%. In vielen Fällen hat sich zur Modifizierung von pulverförmigen und flüssigen Waschmitteln auch ein Zusatz von Komplexbildnern als vorteilhaft erwiesen. Komplexbildner sind beispielsweise Ethylendiamintetraessigsäure, Nitrilotriacetat und Isoserindiessigsäure sowie Phosphonate, wie Aminotrismethylenphosphonsäure, Hydroxyethandiphosphonsäure, Ethylendiamintetraethylenphosphonsäure und deren Salze. Die Komplexbildner werden in Mengen von 0 bis 10 Gew.-%, bezogen auf die Waschmittel, eingesetzt. Die Waschmittel können außerdem Zitrate, Di- oder Triethanolamin, Trübungsmittel, optische Aufheller, Enzyme, Parfümöle und Farbstoffe enthalten. Diese Stoffe sind, falls sie zur Modifizierung der Flüssigwaschmittel verwendet werden, zusammen in Mengen bis zu 5 Gew.-% anwesend. Die Waschmittel sind vorzugsweise phosphatfrei. Sie können jedoch auch Phosphate enthalten, z.B. Pentanatriumtriphosphat und/oder Tetrakaliumpyrophosphat. Falls Phosphate eingesetzt werden, beträgt der Anteil der Phosphate an der Gesamtformulierung des Waschmittels bis 25 Gew.-%.

Die K-Werte der Polymerisate wurden nach H. Fikentscher, Cellulosechemie, Band 13, 58 bis 64 und 71 bis 74 (1932), bestimmt. Dabei bedeutet K = k mal $10^3$. Die Messungen wurden an 1 %igen wäßrigen Lösungen der Pfropfcopolymerisate bei 25°C und einem pH-Wert von 7 durchgeführt. Falls nichts anderes angegeben ist, bedeuten die folgenden Angaben in % immer Gew.-%.

Beispiele

Herstellung der Pfropfcopolymerisate

Beispiel 1

In einem 2 l fassenden Kessel, der mit Ankerrührer, Rückflußkühler und einer Vorrichtung für das Arbeiten unter Stickstoffatmosphäre ausgestattet ist, werden 400 g Wasser vorgelegt und unter Rühren mit 120 g Kasein versetzt. Nach Zugabe von 6 g einer 50 %igen wäßrigen Natronlauge bei 20°C erhält man eine klare, viskose Lösung. Dazu gibt man dann 130 g einer 30 %igen wäßrigen Natriumacrylatlösung und 100 g einer 3 %igen wäßrigen Kaliumperoxodisulfatlösung. Das Reaktionsgemisch wird unter Rühren auf eine Temperatur von 70°C erwärmt und 4 Stunden bei dieser Temperatur gehalten. Dann gibt man ein Konservierungsmittel zu und erhält eine Lösung eines Pfropfcopolymerisats von Acrylsäure auf Kasein mit einem Feststoffgehalt von 21 %. Das Pfropfcopolymerisat hat einen K-Wert von 22,9.

Pfropfcopolymerisate 2 bis 4

Diese Pfropfcopolymerisate werden analog dem Pfropfcopolymerisat 1 jedoch mit den aus der nachfolgenden Zusammenstellung ersichtlichen Mengen an Einsatzstoffen hergestellt. Durch Zugabe von Wasser wird der gewünschte Feststoffanteil eingestellt.

| Pfropfcopolymerisat | Wasser g | Kasein g | 50%ige Natron-lauge g | 30%ige wäßr. Na-acrylatlsg. g | 3%ige wäßr. Na-peroxodisulfatlsg. g | Feststoffgehalt % | K-Wert |
|---|---|---|---|---|---|---|---|
| 2 | 400 | 120 | 6 | 66 | 100 | 19 | 24,9 |
| 3 | 400 | 120 | 6 | 600 | 150 | 23,8 | 118 |
| 4 | 180 | 60 | 3 | 800 | 150 | 19,3 | 161 |

Man erhält jeweils homogene, viskose Lösungen.

Pfropfcopolymerisat 5

In der für die Herstellung des Pfropfcopolymerisats 1 verwendeten Apparatur werden 120 g Kasein in 380 g Wasser unter Rühren aufgeschlämmt. Nach Zugabe von 6 g 50 %iger wäßriger Natronlauge erhält man eine klare Lösung von Kasein in Wasser. Man fügt dann bei Raumtemperatur eine Lösung von Natriummaleat, die durch Lösen von 24,5 g Maleinsäureanhydrid in 100 g Wasser und Zusatz von 40 g 50 %iger wäßriger Natronlauge erhältlich ist, in einer Portion zu. Dann gibt man ebenfalls auf einmal eine 30 %ige wäßrige Natriumacrylatlösung zu, die durch Neutralisation von 115 g Acrylsäure in 260 g Wasser mit 128 g 50 %iger wäßriger Natronlauge hergestellt wurde. Die so erhältliche Reaktionslösung wird nach Zugabe von 150 g einer 3 %igen wäßrigen Kaliumperoxodisulfatlösung in einer Stickstoffatmosphäre unter Rühren auf 90°C erwärmt und innerhalb von 4 Stunden bei dieser Temperatur polymerisiert. Nach Zugabe eines Konservierungsmittels erhält man eine viskose Lösung mit einem Feststoffgehalt von 22,6 %. Das Pfropfcopolymerisat hat einen K-Wert von 52,5.

Pfropfcopolymerisat 6

Ein 2 1 fassender Rührkessel, der mit Ankerrührer, Rückflußkühler, Dosiereinrichtungen und einer pH-Glaselektrode ausgestattet ist, werden bei einer Temperatur von 20°C 120 g Kasein in 600 g Wasser unter Rühren suspendiert. Man fügt dann 8 g einer 50 %igen wäßrigen Natronlauge zu, so daß sich das Kasein klar löst. Man tropft dann eine Lösung von 24,5 g Maleinsäureanhydrid in 30 g wasserfreiem Aceton innerhalb einer halben Stunde unter sehr effektivem Rühren zu und hält dabei den pH-Wert des Reaktionsgemisches durch Zugabe von 90 g 10 %iger wäßriger Natronlauge auf 7 bis 8. Man rührt das Reaktionsgemisch noch weitere 5 Stunden bei 20°C und läßt es danach 15 Stunden stehen. Dann gibt man in einer Portion eine Lösung von 115 g Acrylsäure in 250 g Wasser, die mit 128 g 50 %iger wäßriger Natronlauge neutralisiert worden ist, zu, versetzt das Reaktionsgemisch mit einer Lösung von 4,5 g Kaliumperoxodisulfat in 150 g Wasser und erhitzt das Reaktionsgemisch in einer Stickstoffatmosphäre auf 90°C. Bei dieser Temperatur wird das Reaktionsgemisch 7 Stunden polymerisiert. Man erhält nach Zugabe eines Konservierungsmittels eine niedrigviskose Lösung mit einem Feststoffgehalt von 18,9 %. Das Pfropfcopolymerisat hat einen K-Wert von 50,1.

Pfropfcopolymerisat 7

In dem Reaktor, der für die Herstellung des Pfropfcopolymerisats 6 verwendet wurde, werden 120 g Kasein in 550 g Wasser suspendiert. Dann fügt man 180 g Vinylacetat zu und rührt das Gemisch 15 Minuten. Danach dosiert man eine Lösung von 8 g 50 %iger wäßriger Natronlauge in 25 g Wasser innerhalb von 30 Minuten zu und rührt die Mischung 30 Minuten bei 20°C. Anschließend erhitzt man die Mischung auf 90°C, fügt eine Lösung von 3 g Kaliumperoxodisulfat in 100 g Wasser auf einmal zu. Durch Zugabe von 10 %iger wäßriger Natronlauge wird der pH-Wert der Reaktionsmischung in dem Bereich von 7 bis 8 gehalten. Das Reaktionsgemisch wird 2 Stunden bei 90°C gerührt, mit einer Lösung von 1 g Kaliumperoxodisulfat in 50 g Wasser versetzt und anschließend weitere 5 Stunden bei 90°C gehalten. Nach Zugabe von 1 g tert.-Butylperpivalat wird das Reaktionsgemisch noch 3 Stunden auf 90°C erhitzt. Danach destilliert man durch Einleiten von Wasserdampf das nicht umgesetzte Vinylacetat ab. Man erhält eine Emulsion eines Pfropfcopolymerisats mit einem Feststoffgehalt von 13,7 % und einer Viskosität von 73,6 mPas (gemessen bei 20°C), die durch Zugabe eines handelsüblichen Konservierungsmittels stabilisiert wird.

Pfropfcopolymerisat 8

In einem 2 1-Reaktor mit mechanischem Rührwerk und 2 Zulaufgefäßen wird unter Stickstoff 600 g Wasser bei 20°C unter Rühren vorgelegt und mit 120 g festem Casein versetzt. Zu der entstehenden Suspension werden 9,5 g 50%ige Natronlauge zugefügt, wobei eine viskose Lösung mit dem pH-Wert 10 entsteht. Diese Lösung wird auf 70°C erwärmt und innerhalb 45 Minuten mit 30 g Vinylacetat und einer Lösung von 3 g Kaliumperoxodisulfat in 100 g Wasser tropfenweise versetzt. Man erhöht die Temperatur auf 80°C und läßt unter Rühren noch weitere 2 Stunden polymerisieren. Man fügt weitere 1,5 g Kaliumperoxodisulfat in 50 g Wasser zu und rührt 4 Stunden bei 80°C weiter. Nach Zugabe eines handelsüblichen Konservierungsmittels erhält man eine trübe Lösung des Pfropfcopolymers mit einem Feststoffanteil von 17,6 Gew.-% und einem K-Wert 27,9. Der Gehalt an monomerem Vinylacetat in der wäßrigen Emulsion beträgt unter 0,003 Gew.-%.

Pfropfcopolymerisat 9

Ein 2 1-Reaktor mit gutem mechanischem Rührwerk und Rückflußkühler wird unter Stickstoff mit 400 g Wasser gefüllt, dann wird 120 g Casein eingerührt. Nach Zugabe von 50%iger Natronlauge werden 180 g n-Butylacrylat innerhalb 10 Minuten zugegeben. Zu der Mischung werden dann 100 g Methanol innerhalb 5 Minuten zugetropft und 30 Minuten bei 20°C gerührt. Nach Zugabe einer Lösung von 3 g Kaliumperoxodisulfat in 100 g Wasser erhitzt man zum Sieden und rührt bei dieser Temperatur noch 1 Stunde weiter. Dann wird eine Lösung von 2 g Kaliumperoxodisulfat in 100 g Wasser innerhalb 2 Stunden zugetropft, wobei weiterhin unter Rückfluß gehalten wird. Das Methanol wird abdestilliert und man erhält durch Nachstellen des pH-Wertes auf 8 mittels Natronlauge und Wasser eine milchig trübe wäßrige Emulsion mit einem Feststoffanteil von 28% und K-Wert 24,5. Der Anteil an monomeren Butylacrylat beträgt 0,07%. Die Emulsion wird durch ein handelsüblichen Konservierungsmittel stabilisiert.

Pfropfcopolymerisat 10

In einem 2 1-Reaktor werden 450 g Wasser und 120 g Casein bei 20°C innig verrührt, mit 40 g Methylmethacrylat und anschließend mit 40 g 10%iger Natronlauge versetzt. Man rührt 30 Minuten bei 20°C, setzt eine Lösung von 2 g Natriumperoxodisulfat in 100 g Wasser zu und erwärmt die Mischung auf 80°C. Man läßt 1 Stunde bei dieser Temperatur rühren, tropft anschließend innerhalb einer Stunde eine Natriumacrylatlösung zu, die durch Neutralisieren einer Lösung von 26 g Acrylsäure in 50 g Wasser mit 29 g 50%iger Natronlauge hergestellt wurde, und gleichzeitig innerhalb 1,5 Stunden eine Lösung von 2 g Natriumperoxodisulfat in 100 g Wasser und läßt noch eine weitere Stunde bei dieser Temperatur unter Rühren polymerisieren. Die erhaltene trübe Lösung hat einen Feststoffgehalt von 21 Gew.-%, K-Wert 26,4 und einen Restmonomerengehalt von 0,002% Methylmethacrylat. Durch Zugabe eines handelsüblichen Konservierungsmittels wird die Probe stabilisiert.

Anwendungstechnische Beispiele

Die Wirksamkeit der erfindungsgemäßen Pfropfcopolymeren in Flüssigwaschmitteln wird in den Beispielen mit Hilfe der Primär- und Sekundärwaschwirkung dieser Waschmittel demonstriert.

Unter Primärwaschwirkung versteht man die eigentliche Schmutzentfernung vom Textilmaterial. Als Grad für die Schmutzentfernung wird dabei der Unterschied im Weißgrad zwischen dem ungewaschenen und dem gewaschenen Textilmaterial nach einer Wäsche bestimmt. Als textiles Testmaterial verwendet man Baumwoll-, Baumwoll/Polyester- und Polyester-Gewebe mit Standardanschmutzung. Nach jeder Wäsche wird der Weißgrad des Gewebes in % Remission in einem Elrephophotometer der Fa. Zeiss bestimmt.

Unter Sekundärwaschwirkung werden die Effekte verstanden, die durch die Wiederanlagerung des vom Gewebe abgelösten Schmutzes auf das Gewebe in der Waschflotte zustande kommen. Die Sekundärwaschwirkung kann erst nach mehreren Wäschen, z.B. 3, 5, 10 oder sogar erst 20 Wäschen sichtbar werden, die sich in einer zunehmenden Vergrauung (Redeposition) bemerkbar macht, d.h. Ansammlung von Schmutz aus der Waschflotte auf dem Gewebe. Zur Bestimmung der Vergrauungsneigung wäscht man Standardschmutzgewebe zusammen mit weißem Testgewebe mehrfach und erneuert das Schmutzgewebe nach jeder Wäsche. Der von dem Schmutzgewebe abgelöste Schmutz, der während der Wäsche auf das weiße Testgewebe aufzieht, bewirkt dabei einen Abfall im Weißgrad, der gemessen wird. Die erfindungsgemäß in Flüssigwaschmitteln zu verwendenden Pfropfcopolymerisate können auch zur Formulierung von pulverförmigen Waschmitteln eingesetzt werden.

Flüssigwaschmittel

Formulierung A

| | |
|---|---|
| 10 % | Natriumdodecylbenzolsulfonat, 50 %ig in Wasser |
| 3 % | des Reaktionsproduktes aus 1 Mol $C_{13/15}$-Oxoalkohol und 7 Mol Ethylenoxid |
| 2 % | Polypropylenglykol (Molekulargewicht 600) |
| 77 % | Wasser |
| 8 % | erfindungsgemäß zu verwendendes Pfropfcopolymer |

Formulierung B

| | |
|---|---|
| 13,5 % | Natriumdodecylbenzolsulfonat, 50 %ig in Wasser |
| 17 % | des Reaktionsproduktes aus 1 Mol $C_{13/15}$-Oxoalkohol und 7 Mol Ethylenoxid |
| 14 % | Kokosfettsäure |
| 0,7 % | Citronensäure |

Fortsetzung der Tablelle auf der nächsten Seite

(fortgesetzt)

| | |
|---|---|
| 7 % | Triethanolamin |
| 1 % | KOH |
| 7 % | Isopropanol |
| 5 % | Polypropylenglykol (Molekulargewicht 600) |
| 8 % | erfindungsgemäß zu verwendendes Pfropfcopolymer |
| 26,8 % | Wasser |

Zum Vergleich wurde eine copolymerisatfreie Waschmittelformulierung getestet.

Waschbedingungen

1. Primärwaschwirkung

| Schmutzentfernung, Weißgrad - % Remission | |
|---|---|
| Waschgerät | Launder-O-meter |
| Waschtemperatur | 60°C |
| Wasserhärte | 3 mmol $Ca^{2+}$/ = 16,8°d |
| Verhältnis Ca : Mg | 3 : 1 |
| Waschzeit | 30 Minuten |
| Waschzyklen | 1 |
| Waschmitteldosierung | 6 g Waschmittel pro Liter |
| Flottenverhältnis | 1 : 14,3 |
| Gewebe | WFK 20 D Polyester/Baumwolle (PES/Bw) |
| | MG 111 (Clay/PES/Bw) |
| | WFK 10 D (Bw) |

| Weißgradmessung im Elrepho in % Remission | |
|---|---|
| Weißgrad der ungewaschenen Gewebe: | |
| WFK 10 D | 43,0 |
| WFK 20 D | 40,6 |
| MG 111 | 24,5 |

WFK = Wäschereiforschung Krefeld
Die erhaltenen Ergebnisse sind in Tabelle 1 angegeben.

2. Sekundärwaschwirkung

| Vergrauung | | |
|---|---|---|
| Waschgerät | | Launder-O-meter |
| Waschtemperatur | | 60°C |
| Wasserhärte | | 3 mmol $Ca^{2+}$/l = 16,8°d |
| Verhältnis Ca : Mg | | 3 : 1 |
| Waschzeit | | 30 Minuten |
| Waschzyklen | | 4 |
| Waschmitteldosierung | | 6 g Waschmittel pro Liter |

Fortsetzung der Tablelle auf der nächsten Seite

# EP 0 457 205 B1

(fortgesetzt)

| Vergrauung | | |
|---|---|---|
| Flottenverhältnis | | 1 : 14,3 |
| Gewebe | Weißgewebe: | Baumwolle/Polyester-Gewebe<br>Polyester-Gewebe |
| | Schmutzgewebe: | WFK 20 D/WFK 10 D<br>MG 111<br>(wird nach jeder Wäsche erneuert) |

| Weißgradmessung im Elrepho in % Remission | |
|---|---|
| Weißgrad der ungewaschenen Gewebe: | |
| Baumwolle/Polyester | 82,7 |
| Polyester | 80,0 |

Die Meßwerte sind in Tabelle 2 angegeben.

Tabelle 1

| Primärwaschwirkung | | | | | |
|---|---|---|---|---|---|
| Beispiel | Pfropfcopolymerisat | Weißgrad - % Remission | | | |
| | | Formulierung A | | Formulierung B | |
| | | WFK 20 D | MG 111 | WFK 10 D | MG 111 |
| 1 | 1 | 64,3 | 43,1 | 65,3 | 48,2 |
| 2 | 2 | 55,3 | 36,8 | 64,2 | 43,1 |
| 3 | 3 | 63,4 | 40,5 | 65,1 | 48,1 |
| 4 | 4 | 61,2 | 34,0 | 65,0 | 47,7 |
| 5 | 5 | 64,2 | 44,9 | 64,7 | 46,8 |
| 6 | 6 | 64,3 | 42,5 | 63,9 | 47,3 |
| 7 | 7 | 61,9 | 37,2 | 64,8 | 44,3 |
| Vergl. Beisp. 1 | ohne Polymer | 53,0 | 35,2 | 62,0 | 41,3 |
| | Weißgrad vor der Wäsche | 40,6 | 24,5 | 43,0 | 24,5 |

Tabelle 2

| Vergrauung | | | | | |
|---|---|---|---|---|---|
| Beispiel | Pfropfcopolymerisat | Sekundärwaschwirkung - % Remission | | | |
| | | Formulierung A | | Formulierung B | |
| | | PES | Bw/PES | PES | Bw/PES |
| 8 | 1 | 75,7 | 67,9 | 70,1 | 70,0 |
| 9 | 2 | 67,5 | 64,1 | 67,6 | 61,3 |
| 10 | 3 | 72,9 | 63,1 | 69,6 | 60,8 |
| 11 | 4 | 67,5 | 67,9 | 67,7 | 59,9 |
| 12 | 5 | 70,7 | 67,5 | 69,3 | 65,8 |

Fortsetzung der Tablelle auf der nächsten Seite

Tabelle 2  (fortgesetzt)

| Vergrauung | | | | | |
|---|---|---|---|---|---|
| Beispiel | Pfropfcopolymerisat | Sekundärwaschwirkung - % Remission | | | |
| | | Formulierung A | | Formulierung B | |
| | | PES | Bw/PES | PES | Bw/PES |
| 13 | 6 | 67,3 | 63,1 | 69,6 | 64,5 |
| 14 | 7 | 70,1 | 68,0 | 69,6 | 60,9 |
| Vergl. Beisp. 2 | ohne Polymer | 65,2 | 62,8 | 65,6 | 59,8 |
| | Weißgrad vor der Wäsche | 80,0 | 82,7 | 80,0 | 82,7 |

Mit den erfindungsgemäßen Pfropfcopolymeren lassen sich Flüssigwaschmittelformulierungen herstellen, die deutlich verbessertes Primärwaschvermögen sowohl bei Pigment/Fett-Anschmutzung als auch bei Clay-Anschmutzungen aufweisen. Gleichzeitig wird auch das Wiederaufziehen des gelösten Schmutzes aus der Waschflotte auf das Gewebe verhindert.

Die beschriebenen Pfropfpolymere besitzen auch Bedeutung als sogenannte Soil Release-Additive (im folgenden Text wird Soil Release mit SR abgekürzt). Unter letztgenannten versteht man Waschmittel-Additive, die die Entfernung von insbesonders ölhaltigen Verschmutzungen, wie sie beim Umgang mit Maschinen oder Kraftfahrzeugen vorkommen, von hydrophoben Geweben, z.B. Polyester- oder Baumwoll/Polyester-Mischgeweben, stark erleichtern.

Die Ermittlung der Soil Release-Wirkung erläutert eine kurze Schilderung der Testmethode:

Kleine Lappen aus Polyestergewebe und Bw/Polyestergewebe werden in einem Launder-O-meter (Fa. Atlas, Chicago) mit einem Waschmittel gewaschen, dem 1% eines zu untersuchenden Pfropfpolymeren oder eines Soil Release-Additivs vom Stand der Technik zugesetzt wurde. Der Vergleichsversuch wird ohne Additiv ausgeführt. Nach der Wäsche werden die Gewebestücke ohne zu spülen getrocknet.

Danach wird auf jeden Lappen 0,2 g gebrauchtes Motoröl aus einem Dieselfahrzeug aufgebracht. Es breitet sich ein kreisrunder, von Ruß schwarz gefärbter Fleck aus. Dieser wird nach 10 min zwischen Filterpapier abgepreßt, um überschüssiges Öl zu entfernen. über Nacht wird bei Raumtemperatur altern gelassen.

Nun wird die Remission der Ölflecken auf den Lappen photometrisch bestimmt und die Gewebestücke ein zweites Mal mit den gleichen Zusätzen gewaschen.

Nach dem Trocknen wird erneut die Remission bestimmt.

Die Soil Release-Wirkung wird nach folgender Formel errechnet:

$$\% \, SR = \frac{R - R_v}{R_o - R_v} \times 100$$

$R =$  Remission nach der Wäsche
$R_v =$  Remission vor der Wäsche
$R_o =$  Remission des nicht angeschmutzten Gewebes

Für die Pfropfcopolymeren wurden in einer Wäsche bei 50°C mit 2 g/l eines weiter unten beschriebenen bleichmittelfreien Pulverwaschmittels folgende Werte erhalten:

| Beispiel | Vergleichsbeispiel | | PES | | | Bw/PES | | |
|---|---|---|---|---|---|---|---|---|
| | | | $R_o$ | R | SR% | $R_o$ | R | SR% |
| | 3 | ohne Additiv | 9,6 | 13,9 | 6,2 | 8,5 | 30,4 | 29,8 |
| | 4 | EG/PEG/TPS (Stand d.Technik)+ | 8,9 | 26,6 | 25,0 | 10,2 | 34,9 | 34,4 |
| 15 | Pfropfcopolymerisat 8 | | 9,6 | 29,0 | 27,8 | 9,6 | 39,7 | 41,5 |
| 16 | Pfropfcopolymerisat 9 | | 8,6 | 22,0 | 18,9 | 8,8 | 31,3 | 30,4 |
| 17 | Pfropfcopolymerisat 5 | | 11,1 | 19,2 | 11,8 | 8,6 | 38,4 | 40,5 |
| 18 | Pfropfcopolymerisat 10 | | 8,9 | 26,8 | 25,9 | 9,2 | 37,5 | 38,8 |
| 19 | Pfropfcopolymerisat 2 | | 9,0 | 28,0 | 27,0 | 9,2 | 39,5 | 41,6 |

Demnach zeigen alle Proben Soil Release-Wirkung.

Die Pfropfcopolymerisate 2,8 und 10 übertreffen dabei auf Polyester den Stand der Technik. Auf Bw/Polyester übertreffen die Pfropfcopolymerisate 2, 5, 8 und 10 den Stand der Technik.

Das verwendete Pulverwaschmittel hatte folgende Zusammensetzung.

| $C_{13}/C_{14}$-Oxoalkohol mit 8 Mol Ethylenoxid umgesetzt | 10 % |
|---|---|
| Natriumcarbonat | 35 % |
| Natriumdisilikat | 10 % |
| Additiv gemäß Tabelle 3 | 0 oder 1 % |
| Natriumsulfat | auf 100 % |

* SR-Additiv gemäß DE-OS 3 411 941 und US-PS 3 926 152

**Patentansprüche**

1. Verwendung von wasserlöslichen oder wasserdispergierbaren gepfropften Proteinen, die erhältlich sind durch radikalisch initiierte Copolymerisation von

   (A) monoethylenisch ungesättigten Monomeren in Gegenwart von

   (B) Proteinen, hydrolytisch oder enzymatisch partiell abgebauten Proteinen oder von Proteinen, deren funktionelle Gruppen mit Carbonsäureanhydriden umgesetzt worden sind,

   im Gewichtsverhältnis (A):(B) von (0,5 bis 90):(99,5 bis 10) als Zusatz zu Wasch- und Reinigungsmitteln in Mengen von 0,1 bis 20 Gew.-%, bezogen auf die jeweiligen Formulierungen.

2. Verwendung nach Anspruch 1, dadurch gekennzeichnet, daß die gepfropften Proteine erhältlich sind durch radikalisch initiierte Copolymerisation von

   (A) Monomeren aus der Gruppe von monoethylenisch ungesättigten $C_3$-bis $C_5$-Carbonsäuren, deren Estern, Amiden, Nitrilen und Anhydriden, Vinylestern gesättigter $C_2$- bis $C_4$-Carbonsäuren und Mischungen der genannten Monomeren in Gegenwart von

   (B) Kasein, Gelatine, Knochenleim und Proteinen aus Soja, Getreide, Mais und Erbsen.

3. Phosphatfreie und phosphatarme Wasch- und Reinigung-smittel, die als wesentliche Bestandteile Tenside enthalten, dadurch gekennzeichnet, daß sie 0,1 bis 20 Gew.-%, bezogen auf die jeweiligen Formulierungen, an wasserlöslichen oder wasserdispergierbaren gepfropften Proteinen enthalten, die durch radikalisch initiierte Copolymerisation von

   (A) monoethylenisch ungesättigten Monomeren in Gegenwart von

   (B) Proteinen, hydrolytisch oder enzymatisch partiell abgebauten Proteinen oder von Proteinen, deren funktionelle Gruppen mit Carbonsäureanhydriden umgesetzt worden sind,

   im Gewichtsverhältnis (A):(B) von (0,5 bis 90):(99,5 bis 10) erhältlich sind.

**Claims**

1. The use of water-soluble or water-dispersible grafted proteins which are obtainable by free-radically initiated copolymerization of

   (A) monoethylenic unsaturated monomers
   in the presence of
   (B) proteins, hydrolytically or enzymatically partially degraded proteins or of proteins whose functional groups have been reacted with carboxylic anhydride,

**15**

in a weight ratio of (A):(B) of (0.5-90):(99.5-10) as ingredient of detergents and cleaners in amounts of 0.1 to 20% by weight, based on the respective formulations.

2. A use as claimed in claim 1, characterized in that the grafted proteins are obtainable by free-radically initiated copolymerization of

(A) monomers selected from the group consisting of monoethylenically unsaturated $C_3$-$C_5$-carboxylic acids, their esters, amides, nitriles and anhydrides, vinyl esters of $C_2$-$C_4$-carboxylic acids and mixtures thereof, in the presence of
(B) casein, gelatin, bone glue or protein from soybeans, cereals, maize and peas.

3. Phosphate-free and low-phosphate detergents and cleaners containing surfactants as essential constituents, characterized in that they contain from 0.1 to 20% by weight, based on the respective formulations, of water-soluble or water-dispersible grafted proteins obtainable by free-radically initiated copolymerization of

(A) monoethylenic unsaturated monomers
in the presence of
(B) proteins, hydrolytically or enzymatically partially degraded proteins or of proteins whose functional groups have been reacted with carboxylic anhydride,

in a weight ratio of (A):(B) of (0.5-90):(99.5-10).


**Revendications**

1. Utilisation de protéines greffées, solubles dans l'eau ou dispersibles dans l'eau, que l'on peut obtenir par la copolymérisation amorcée par voie radicalaire

(A) de monomères monoéthyléniquement insaturés
en présence
(B) de protéines, de protéines partiellement dégradées par voie hydrolytique ou enzymatique, ou de protéines dont les radicaux fonctionnels ont réagi avec des anhydrides d'acides carboxyliques,

dans le rapport pondéral (A):(B) de (0,5 à 90):(99,5 à 10), à titre d'additifs pour des agents de lavage et de nettoyage, en proportions de 0,1 à 20% en poids, par rapport aux compositions concernées.

2. Utilisation suivant la revendication 1, caractérisée en ce que les protéines greffées peuvent être obtenues par la copolymérisation amorcée par voie radicalaire

(A) de monomères appartenant au groupe des acides carboxyliques en $C_3$ à $C_5$ monoéthyléniquement insaturés, leurs esters, amides, nitriles et anhydrides, d'esters vinyliques d'acides carboxyliques en $C_2$ à $C_4$ saturés et de mélanges des monomères précités, en présence
(B) de caséine, de gélatines, de gélatine osseuse ou osthéocolle et de protéines provenant du soya, de céréales, du maïs et de haricots.

3. Agents de nettoyage et de lavage dépourvus de phosphates et pauvres en phosphates qui contiennent des agents tensioactifs ou surfactifs à titre de constituants essentiels, caractérisés en ce qu'ils contiennent de 0,1 à 20% en poids, par rapport aux compositions concernées, de protéines greffées, solubles dans l'eau ou dispersibles dans l'eau, que l'on peut obtenir par voie radicalaire

(A) de monomères monoéthyléniquement insaturés
en présence
(B) de protéines, de protéines partiellement dégradées par voie hydrolytique ou enzymatique, ou de protéines dont les radicaux fonctionnels ont réagi avec des anhydrides d'acides carboxyliques,

dans le rapport pondéral (A):(B) de (0,5 à 90):(99,5 à 10).